# EUROPEAN PATENT SPECIFICATION

(11) **EP 4 494 437 B1**
(45) Date of publication and mention of the grant of the patent: **08.04.2026**
(21) Application number: 24176267.3
(22) Date of filing: 16.05.2024
(51) Int. Cl.: A01D 1/00, A01D 34/00

(54) **THEFT PREVENTION SYSTEMS AND METHODS FOR A ROBOTIC GARDEN TOOL**
SYSTEME UND VERFAHREN ZUR DIEBSTAHLSCHUTZ FÜR EIN ROBOTISCHES GARTENWERKZEUG
SYSTÈMES ET PROCÉDÉS DE PRÉVENTION DU VOL POUR UN OUTIL DE JARDINAGE ROBOTISÉ

(30) Priority: 08.06.2023 US 202363506999 P
(43) Date of publication of application: 22.01.2025
(73) Proprietor: Techtronic Cordless GP, Anderson, SC 29621 (US)
(72) Inventor: LI, Shing Hin, Kwai Chung (HK); CHOI, Man Ho, Kwai Chung (HK); LAI, Tat Hei, Kwai Chung (HK); LEE, Chi Chau, Kwai Chung (HK); CHAU, Hau Leung, Kwai Chung (HK); LAI, Hok Sum Sam, Kwai Chung (HK); LEE, Hei Man, Kwai Chung (HK)
(74) Representative: Zimmermann & Partner Patentanwälte mbB

(56) References cited:
- EP-A1- 4 005 450
- EP-B1- 3 533 310
- WO-A1-2020/122579
- WO-A1-2022/045474
- CN-A- 112 435 422
- DE-A1- 102010 041 309
- US-A1- 2019 027 002

## Description

### RELATED APPLICATIONS

### FIELD

The present disclosure relates to robotic garden tools, particularly to methods and systems for preventing and/or responding to theft and/or detected potential theft events of robotic garden tools and associated components.

### BACKGROUND

European patent publication EP 3 533 310 B1 describes a lawn ground management system including an autonomous work vehicle configured to perform a mowing operation by a work unit while autonomously traveling in a work area, and a charging station configured to perform power supply to the autonomous work vehicle includes a locking unit configured to lock the autonomous work vehicle to the charging station for anti-theft performance in a state in which the autonomous work vehicle is located at a charging position to receive the power supply.

### SUMMARY

The invention provides a theft prevention system according to claim 1. Preferred embodiments are provided in the dependent claims.

Other aspects of the disclosure will become apparent by consideration of the detailed description and accompanying drawings.

### BRIEF DESCRIPTION OF THE DRAWINGS

FIG. 1A illustrates a communication system including a robotic garden tool according to some example embodiments.
FIG. 1B illustrates a bottom perspective view of the robotic garden tool of FIG. 1A according to some example embodiments.
FIG. 2 is a block diagram of the robotic garden tool of FIGS. 1A and 1B according to some example embodiments.
FIG. 3 is a block diagram of the external device of FIG. 1A according to some example embodiments.
FIG. 4 is a block diagram of the server of FIG. 1A according to some example embodiments.
FIG. 5 illustrates a flowchart of a method that may be performed by the robotic garden tool of FIG. 1A to prevent theft and/or to respond to detected theft and/or possible theft of the robotic garden tool, of one or more components of the robotic garden tool, and/or of a docking station of FIG. 1A according to some example embodiments.
FIG. 6 illustrates a security camera configured to monitor fiducial markers included on the robotic garden tool of FIG. 1A and the docking station of FIG. 1A according to some example embodiments.

### DETAILED DESCRIPTION

The scope of the invention is defined by the claims. The use of "including," "comprising" or "having" and variations thereof herein is meant to encompass the items listed thereafter and equivalents thereof as well as additional items. The terms "mounted," "connected" and "coupled" are used broadly and encompass both direct and indirect mounting, connecting and coupling. Further, "connected" and "coupled" are not restricted to physical or mechanical connections or couplings, and can include electrical connections or couplings, whether direct or indirect.

It should be noted that a plurality of hardware and software based devices, as well as a plurality of different structural components may be utilized to implement the invention. Furthermore, and as described in subsequent paragraphs, the specific configurations illustrated in the drawings are intended to exemplify embodiments of the invention and that other alternative configurations are possible. The terms "processor," "central processing unit," and "CPU" are interchangeable unless otherwise stated. Where the terms "processor" or "central processing unit" or "CPU" are used as identifying a unit performing specific functions, it should be understood that, unless otherwise stated, those functions can be carried out by a single processor, or multiple processors arranged in any form, including parallel processors, serial processors, tandem processors or cloud processing/cloud computing configurations.

Throughout this application, the term "approximately" may be used to describe the dimensions of various components and/or paths of travel of a robotic garden tool. In some situations, the term "approximately" means that the described dimension is within 1% of the stated value, within 5% of the stated value, within 10% of the stated value, or the like. When the term "and/or" is used in this application, it is intended to include any combination of the listed components. For example, if a component includes A and/or B, the component may include solely A, solely B, or A and B.

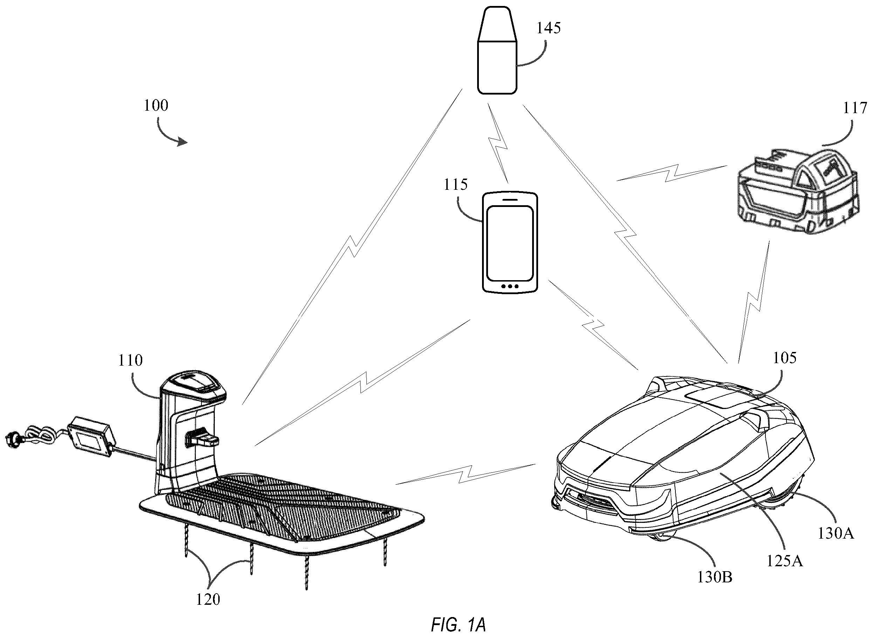

FIG. 1A illustrates a communication system 100 that may include a robotic garden tool 105 (e.g., a robotic lawn mower 105 that may also be referred to as a robotic mower 105), a docking station 110 for the robotic mower 105, an external device 115, and a server 145 according to some example embodiments. The robotic garden tool 105 is primarily described as being a robotic lawn mower 105. However, in other embodiments, the robotic garden tool 105 may include a tool for sweeping debris, vacuuming debris, clearing debris, collecting debris, moving debris, etc. Debris may include plants (such as grass, leaves, flowers, stems, weeds, twigs, branches, etc., and clippings thereof), dust, dirt, jobsite debris, snow, and/or the like. For example, other implementations of the robotic garden tool 105 may include a vacuum cleaner, a trimmer, a string trimmer, a hedge trimmer, a sweeper, a cutter, a plow, a blower, a snow blower, etc.

In some embodiments, a lawn may include any type of property that includes grass, a crop, some other material to be trimmed, cleared, gathered, etc., and/or that includes some material to receive treatment from the robotic garden tool 105 (e.g., fertilizer to treat grass in the lawn). In some embodiments, a lawn may include paved portions of a property (e.g., a driveway), for example, when the robotic garden tool 105 is used for snow plowing/removal.

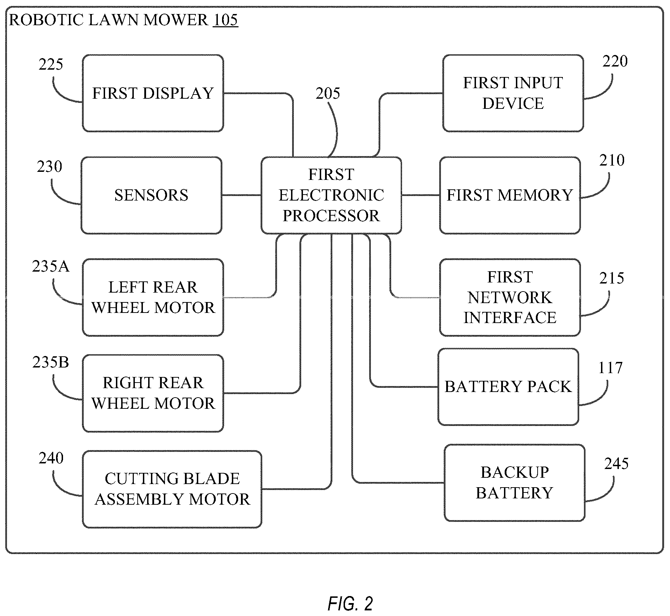

In some embodiments, the docking station 110 may be installed in a yard/lawn using stakes 120. The robotic mower 105 may be configured to mow the yard and dock at the docking station 110 in order to charge a battery pack 117 of the robotic mower 105 (see FIG. 2). In some embodiments, the docking station 110 is configured to make an electrical connection with a power supply (e.g., via a cord and plug connected to a wall outlet that is connected to a power grid) in order to provide charging current to the robotic mower 105 when the robotic mower 105 is electrically coupled with the docking station 110. In some embodiments, the battery pack 117 is a removable battery pack 117 that may be, for example, removed and replaced with a new battery pack 117 after a period of time. In some instances, the battery pack 117 may be configured to be permanently installed in the robotic mower 105 such that the battery pack 117 is not intended to be removed by a user but may optionally be removed by a service technician using a non-standardized tool as described in greater detail herein. The battery pack 117 may be located in a battery pack compartment of the robotic mower 105. In some instances, the battery pack compartment may include a door/cover and/or the like to allow and prevent access to the battery pack 117.

In some embodiments, the docking station 110 may also be electrically connected to a boundary cable (i.e., boundary wire). In some embodiments, the docking station 110 provides power to the boundary cable to control the boundary cable to provide/emit, for example, an electromagnetic signal that may be detected by the robotic mower 105. In some embodiments, in response to detecting the electromagnetic signal from the boundary cable, the robotic mower 105 is configured to control its movement such that the robotic mower 105 remains within a boundary defined by the boundary cable. For example, in response to detecting the boundary cable, the robotic mower 105 may be configured to stop moving forward and turn in a random direction to begin traveling in an approximately straight line until the robotic mower 105 again detects the boundary cable.

In some embodiments, the robotic mower 105 does not operate in conjunction with a boundary cable. Rather, the robotic mower 105 may include mapping capabilities, positioning tracking capabilities, and/or the like that allow the robotic mower 105 to remain within a predefined boundary (e.g., a virtual boundary) without the use of the boundary cable. It should be understood that some portions of the virtual boundary may define an area in which the robotic mower 105 is configured not to enter (e.g., an inner virtual boundary that surrounds a flower bed, a tree, etc. within an outer virtual boundary of a yard/lawn). In some embodiments, the robotic mower 105 may determine its location using a location determination component (e.g., a global positioning system (GPS) receiver) by communicating with other devices such as one or more satellites, a base station device used as a reference point, and/or the like.

In some embodiments, the docking station 110 includes a docking cable loop, a magnet configured to be sensed by a magnetic sensor of the robotic mower 105, and/or another transmitting device configured to emit a docking signal that may be detected by the robotic mower 105. For example, the docking signal may indicate that the robotic mower 105 is near the docking station 110 and may allow the robotic mower 105 to take certain actions in response thereto to, for example, dock the robotic mower 105 at the docking station 110.

Each of the devices in the communication system 100 shown in FIG. 1A may be configured to communicate with each other (e.g., wirelessly or in a wired manner) directly or indirectly. As indicated in FIG. 1A, in some embodiments, the robotic mower 105 may be configured to wirelessly and bidirectionally communicate with the docking station 110, the external device 115, and/or the server 145. For example, the robotic mower 105 may be configured to communicate with the external device 115 when the robotic mower 105 is within communication range of the external device 115 (e.g., via Bluetooth^{™}, WiFi^{™}, or the like). In some instances, the robotic mower 105 may additionally or alternatively be configured to communicate with the external device 115 over a long range communication modality (e.g., cellular network) when the external device 115 is located remotely from the robotic mower 105. In some instances, the robotic mower 105 is additionally or alternatively configured to communicate with the external device 115 via an intermediary device such as the server 145, a cellular communication tower/base station, another device in a cellular network, or the like (e.g., when the robotic mower 105 is outside of direct communication range with the external device 115). The external device 115 may be, for example, a user device that is operated by a user/owner of the robotic mower 105. For example, the external device 115 may be a smart phone (as illustrated), a laptop computer, a tablet computer, a personal digital assistant (PDA), a wireless communication router that allows another external device 115 (not shown) that is located remotely from the robotic mower 105 to communicate with the robotic mower 105, or another electronic device capable of communicating with the robotic mower 105.

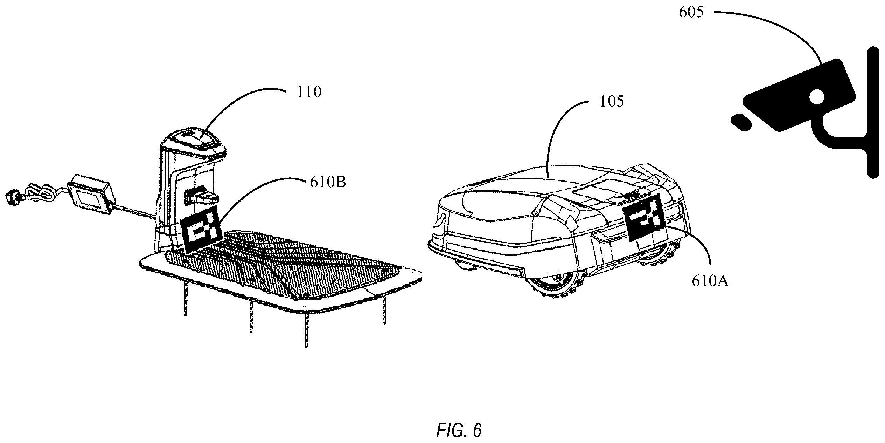

In some instances, the external device 115 may be mounted near an entry/exit point of a user's home and may include a user interface configured to receive user inputs (e.g., when the user is leaving or exiting their home) that cause commands/instructions to be transmitted to the robotic mower 105 to control functionality of the robotic mower 105 as described in greater detail below. In some instances, the external device 115 may be embodied as a security camera (e.g., security camera 605 of FIG. 6) configured to monitor an expected location of the robotic mower 105 and/or the docking station 110 (e.g., mounted inside or outside a home of the user of the robotic mower 105). In such embodiments, the external device 115 may not include a user interface itself. However, the security camera may be communicatively coupled to another external device 115 (e.g., a smart phone, computer, etc.) to provide captured image data to the another external device 115.

The external device 115 may generate a user interface and allow a user to access and interact with robotic mower information. The external device 115 may receive user inputs to determine operational parameters/instructions for the robotic mower 105, enable or disable features of the robotic mower 105, and the like. In some embodiments, the communication between the external device 115 and the robotic mower 105 may be wired (e.g., via a Universal Serial Bus (USB) cord configured to connect to respective USB ports of the external device 115 and the robotic mower 105).

As indicated in FIG. 1A, in some embodiments, the battery pack 117 may be configured to communicate with other devices of the communication system 100 even when the battery pack 117 has been removed from the robotic mower 105. Accordingly, the battery pack 117 may includes its own communication circuitry in some instances.

As indicated by FIG. 1A, in some embodiments, the external device 115 may be configured to communicate with the server 145 (e.g., over a cellular network). Additionally, the robotic mower 105 may be configured to communicate directly with the server 145 (e.g., over a cellular network). In some instances, the robotic mower 105 is additionally or alternatively configured to communicate with the server 145 indirectly, for example, via the external device 115 that relays information between the robotic mower 105 and the server 145. In some embodiments, the robotic mower 105 is configured to bidirectionally wirelessly communicate with the external device 115 and/or the server 145.

In some instances, the server 145 stores information about one or more robotic mowers 105 such that the information is accessible remotely by one or more users. For example, the stored information may include status information such as a current operational state of the robotic mower 105 (e.g., charging/docked, mowing, etc.), a state of charge of the battery pack 117, a signal strength of a communication modality of the robotic mower 105, a location of the robotic mower 105, and/or the like. In some instances, the server 145 may perform some of the anti-theft functionality described herein such as receiving data from one or more other devices, making determinations regarding whether an anti-theft action should be taken by one or more robotic mowers 105, and/or providing a notification to the external device 115 regarding a potential theft event.

FIG. 1A is merely one example communication system 100. In some instances, the communication system 100 includes fewer or additional devices. For example, the system may include additional external devices 115, docking stations 110, robotic mowers 105, and/or server 145 in some instances. As another example, the external device 115 and/or the server 145 may not be included in the communication system 100.

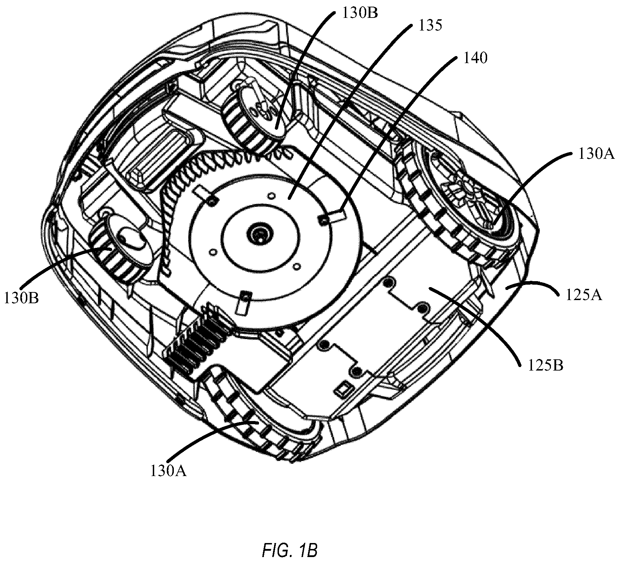

FIG. 1B illustrates a bottom perspective view of the robotic mower 105 according to some example embodiments. The robotic mower 105 may include a housing 125 that may include an outer housing 125A (i.e., outer housing shell) and an inner housing 125B. The outer housing 125A may be coupled to the inner housing 125B. The robotic mower 105 also may include wheels 130 (i.e., a set of wheels 130) coupled to the inner housing 125B and configured to rotate with respect to the housing 125 to propel the robotic mower 105 on an operating surface (e.g., a yard to be mowed). The wheels 130 may include motor-driven wheels 130A and non-motor-driven wheels 130B. In the embodiment shown in FIG. 1B, two rear wheels 130A are motor-driven wheels 130A while two front wheels 130B are non-motor-driven wheels 130B. In other embodiments, the robotic mower 105 may include a different wheel arrangement (e.g., a different number of total wheels, a different number of each type of wheel, different wheels being motor-driven or non-motor-driven, and/or the like). In some embodiments, the housing 125 may not include the outer housing 125A and the inner housing 125B. Rather, the housing 125 may include a single integrated body/housing to which the wheels 130 are attached.

In some embodiments, the robotic mower 105 includes a wheel motor 235 (see FIG. 2) coupled to one or more wheels 130 and configured to drive rotation of the one or more wheels 130. In some embodiments, the robotic mower 105 includes multiple wheel motors 235 where each wheel motor 235 is configured to drive rotation of a respective motor-driven wheel 130A (see FIG. 2).

In some embodiments, the robotic mower 105 includes a working element (e.g., cutting blade assembly 135) coupled to the inner housing 125B and configured to rotate with respect to the housing 125 to perform a task (e.g., cut grass) on the operating surface. The cutting blade assembly 135 may include a rotating disc to which a plurality of cutting blades 140 configured to cut the grass are attached. In some embodiments, the robotic mower 105 includes a task motor (e.g., a cutting blade assembly motor 240) (see FIG. 2) coupled to the inner housing 125B and to the cutting blade assembly 135. The task motor (e.g., the cutting blade assembly motor 240) may be configured to drive rotation of the working element (e.g., the cutting blade assembly 135) to perform a task (e.g., cut the grass) on the operating surface. In some instances the working element may include at least one selected from the group of the cutting blade assembly 135 that is configured to cut grass, a snow treating element that is configured to move snow, a fertilizing element that is configured to fertilize a lawn, and combinations thereof.

In some embodiments, the robotic mower 105 and/or the docking station 110 include additional components and functionality than is shown and described herein.

FIG. 2 is a block diagram of the robotic mower 105 according to some example embodiments. In the embodiment illustrated, the robotic mower 105 includes a first electronic processor 205 (for example, a microprocessor or other electronic device). The first electronic processor 205 includes input and output interfaces (not shown) and is electrically coupled to a first memory 210, a first network interface 215, an optional first input device 220, an optional display 225, one or more sensors 230, a left rear wheel motor 235A, a right rear wheel motor 235B, a cutting blade assembly motor 240, the battery pack 117, and an optional backup battery 245 (e.g., a coin cell battery). In some embodiments, the robotic mower 105 includes fewer or additional components in configurations different from that illustrated in FIG. 2. For example, the robotic mower 105 may not include the first input device 220 and/or the first display 225. As another example, the robotic mower 105 may include a height adjustment motor configured to adjust a height of the cutting blade assembly 135. As yet another example, the robotic mower 105 may include additional sensors or fewer sensors than the sensors 230 described herein. In some embodiments, the robotic mower 105 performs functionality other than the functionality described below.

The first memory 210 may include read only memory (ROM), random access memory (RAM), other non-transitory computer-readable media, or a combination thereof. The first electronic processor 205 is configured to receive instructions and data from the first memory 210 and execute, among other things, the instructions. In particular, the first electronic processor 205 executes instructions stored in the first memory 210 to perform the methods described herein.

The first network interface 215 is configured to send data to and receive data from other devices in the communication system 100 (e.g., the external device 115, the server 145, the docking station 110, the battery pack 117, and/or the like). In some embodiments, the first network interface 215 includes one or more transceivers for wirelessly communicating with the external device 115 and/or the docking station 110 (e.g., a first RF transceiver configured to communicate via Bluetooth^{™}, WiFi^{™}, or the like). The first network interface 215 may include an additional transceiver for wirelessly communicating with the server 145 (and/or the external device 115 when the external device 115 is located outside of short-range communication distance) via, for example, cellular communication. The first network interface 215 may also include a first GPS receiver (e.g., a first real-time kinematic global navigating satellite systems (RTK GNSS) receiver) configured to receive a location signal from one or more satellites (not shown) to allow the robotic mower 105 to determine its current location at any given time. In some instances, the first GPS receiver may receive location signals that allow for the determination of the location of the robotic mower 105 without interaction with another device. In other instances, the robotic mower 105 may additionally communicate with a stationary base station device (not shown) to receive reference/calibration location signals that are used in combination with location signals received by the first GPS receiver to determine the location of the robotic mower 105. In some embodiments, at least some of the transceivers and/or receivers of the robotic mower 105 may be combined or share some elements (e.g., an antenna and/or other hardware). Alternatively or additionally, the first network interface 215 may include a connector or port for receiving a wired connection to the external device 115, such as USB cable.

The first user input device 220 is configured to allow the first electronic processor 205 to receive a user input from a user to, for example, set/adjust an operational parameter of the robotic mower 105. The first display 225 is configured to display a user interface to the user. Similar to the user interface of the external device 115 described previously herein, the user interface displayed on the first display 225 may allow the user to access and interact with robotic mower information. In some embodiments, the first display 225 may also act as the first input device 220. For example, a touch sensitive input interface may be incorporated into the first display 225 to allow the user to interact with content provided on the first display 225. The first display 225 may be a liquid crystal display (LCD) screen, an organic light emitting display (OLED) display screen, or an E-ink display. In some embodiments, the first display 225 includes future-developed display technologies.

In some embodiments, the user input device 220 includes a user-actuatable button/interface (not shown) disposed on the housing 125 and configured to enable user interaction with the robotic mower 105. An electronic component may be associated with the user-actuatable button and may be configured to generate a signal to the first electronic processor 205 in response to the user-actuatable button being actuated via user input. For example, the user-actuatable button may be a user-actuatable "stop" button that provides a signal to the first electronic processor 205 to control a stop operation of the robotic mower 105. In other words, the user-actuatable "stop" button may be a mechanism for switching off functionality of the robotic mower 105 abruptly. For example, the first electronic processor 205 may be configured to stop the robotic mower 105 from operating (e.g., by stopping/preventing all motors 235, 240, etc. from operating) in response to determining that the user-actuatable "stop" button has been actuated. In some instances, the button may have a different function.

In some embodiments, the first electronic processor 205 is in communication with a plurality of sensors 230 that may include electromagnetic field sensors, radio frequency sensors (e.g., radio frequency identification (RFID) interrogators/sensors), Hall sensors, other magnetic sensors, a transceiver/receiver of the first network interface 215, and/or the like.

In some embodiments, the sensors 230 include one or more lift sensors coupled to the first electronic processor 205 to allow the first electronic processor 205 to determine when at least a portion of the housing 125 has been lifted. For example, each lift sensor may include a magnet on one of the inner housing 125B and the outer housing 125A and a magnetic sensor on the other of the inner housing 125B and the outer housing 125A. Such a magnet and magnetic sensor pair may allow the first electronic processor 205 to determine when at least a portion of the outer housing 125A has been moved away from the inner housing 125B to indicate that the robotic mower 105 has been lifted by the outer housing 125A.

In some embodiments, the sensors 230 include an inertial measurement unit (IMU) that may include one or more sensors such as gyroscopes, accelerometers, and/or the like. Based on signals received from the IMU, the first electronic processor 205 may determine an acceleration, orientation, angular rate, etc. of the robotic mower 105 with respect to ground/gravity, among other characteristics of the robotic mower 105.

In some embodiments, the sensors 230 include one or more sensors configured to detect that the battery pack compartment is attempted to be accessed, that the battery pack 117 is attempted to be removed, or both that the battery pack compartment is attempted to be accessed and that the battery pack 117 is attempted to be removed. For example, a door/cover of the battery pack compartment and/or the battery pack compartment itself may include a pressure sensor, a contact sensor (e.g., similar to a contact sensor on a touch screen), and/or the like to determine when a user is attempting to access the battery pack compartment. As another example, the battery pack 117 and/or the battery pack compartment (e.g., terminals in the battery pack compartment that receive the battery pack 117) may include a pressure sensor or other sensor to determine when a user is attempting to remove the battery pack 117 from the battery pack compartment.

In some embodiments, the inner housing 125B includes an odometry sensor (e.g., one or more Hall sensors or other types of sensors) for each motor-driven wheel 130A. Data from the odometry sensors may be used by the first electronic processor 205 to determine how far each wheel 130A has rotated and/or how fast each wheel 130A is rotating, for example, in order to accurately control movement (e.g., turning capabilities) of the robotic mower 105. For example, the first electronic processor 205 may control the robotic mower 105 to move in an approximately straight line by controlling both of the wheel motors 235A and 235B to rotate at approximately the same speed. As another example, the first electronic processor 205 may control the robotic mower 105 to turn and/or pivot in a certain direction by controlling one of the wheel motors 235A or 235B to rotate faster than or in an opposite direction than the other of the wheel motors 235A or 235B. Similarly, rotating only one of the wheel motors 235A or 235B while the other wheel motor 235A or 235B is not rotated should result in the robotic mower 105 turning/pivoting.

In some embodiments, the inner housing 125B includes a cutting blade assembly motor sensor (e.g., one or more Hall sensors or other types of sensors). Data from the cutting blade assembly motor sensor may be used by the first electronic processor 205 to determine how fast the cutting blade assembly 135 is rotating.

In some embodiments, the battery pack 117 provides power to the first electronic processor 205 and to other components of the robotic mower 105 such as the motors 235A, 235B, 240 and the first display 225. In some embodiments, power may be supplied to other components besides the first electronic processor 205 through the first electronic processor 205 or directly to the other components. In some embodiments, when power is provided directly from the battery pack 117 to the other components, the first electronic processor 205 may control whether power is provided to one or more of the other components using, for example, a respective switch (e.g., a field-effect transistor) or a respective switching network including multiple switches. In some embodiments, the robotic mower 105 includes active and/or passive conditioning circuitry (e.g., voltage step-down controllers, voltage converters, rectifiers, filters, etc.) to regulate or control the power received by the components of the robotic mower 105 (e.g., the first electronic processor 205, the motors 235A, 235B, 240, etc.) from the battery pack 117. In some embodiments, the battery pack 117 is a removable battery pack. In some embodiments, the battery pack 117 is configured to receive charging current from the docking station 110 when the robotic mower 105 is docked at the docking station 110 and electrically connected thereto.

In some embodiments, the backup battery 245 is a coin cell battery that may be permanently installed in the robotic mower 105. In other instances, the backup battery 245 may be removably inserted in the robotic mower 105 in the same battery pack compartment as the battery pack 117 or in a different portion of the housing 125. The backup battery 245 may be configured to provide power to at least a portion of the first electronic processor 205, the first network interface 215, and/or the first display 225, for example, when the battery pack 117 is removed from the robotic mower 105 (i.e., not located in the battery pack compartment) and/or when the battery pack 117 has failed or does not have enough charge to provide power to the components of the robotic mower 105. Thus, the first electronic processor 205, the first network interface 215, and/or the first display 225 may continue to function even when the battery pack 117 is not connected to the robotic mower 105 and/or when the battery pack 117 has a low state of charge. In some instances, the backup battery 245 does not provide power to the motors 235A, 235B, 240, etc. of the robotic mower 105. In some instances, the first electronic processor 205 may control whether power is provided to itself and/or one or more other components of the robotic mower 105 from the backup battery 245 using, for example, a respective switch (e.g., a field-effect transistor). In some instances, the robotic mower 105 includes active and/or passive conditioning circuitry (e.g., voltage step-down controllers, voltage converters, rectifiers, filters, etc.) to regulate or control the power received by the components of the robotic mower 105 (e.g., the first electronic processor 205, the motors, 235A, 235B, 240, etc.) from the backup battery 245. In some instances, the backup battery 245 is configured to receive charging current from the docking station 110 when the robotic mower 105 is docked at the docking station 110 and electrically connected thereto. In some instances, the backup battery 245 may additionally or alternatively receive charging current from the battery pack 117.

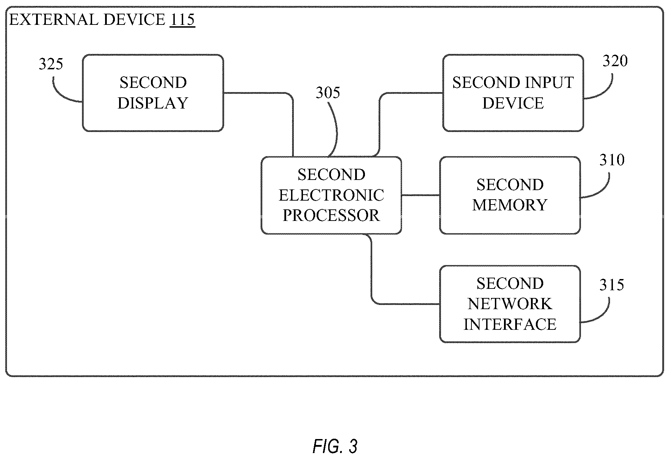

FIG. 3 is a block diagram of the external device 115 according to some example embodiments. In the example shown, the external device 115 includes a second electronic processor 305 electrically coupled to a second memory 310, a second network interface 315, a second user input device 320, and a second display 325. These components are similar to the like-named components of the robotic mower 105 explained above with respect to FIG. 2 and function in a similar manner as described above. For example, the second display 325 may also function as an input device (e.g., when the second display 325 is a touchscreen). In some instances, the combination of the second input device 320 and the second display 325 may be referred to as a user interface of the external device 115. In some embodiments, the second network interface 315 includes one or more transceivers for wirelessly communicating with the robotic mower 105 (e.g., a second RF transceiver configured to communicate via Bluetooth^{™}, WiFi^{™}, or the like). The second network interface 315 may include an additional transceiver for wirelessly communicating with the servers 145 (and/or another external device 115 and/or the robotic mower 105 when these devices are outside of a short-range communication distance) via, for example, cellular communication. The second network interface 315 may also include a second GPS receiver (e.g., a RTK GNSS receiver) configured to receive a location signal from one or more satellites. In some embodiments, at least some of the transceivers and/or receivers of the external device 115 may be combined or share some elements (e.g., an antenna and/or other hardware). In some embodiments, the second electronic processor 305 sends data to and receives data from the robotic mower 105 and/or other devices of the communication system 100 via the second network interface 315.

In some instances, the external device 115 includes fewer or additional components in configurations different from that illustrated in FIG. 3. For example, the external device 115 may include a battery, another GPS receiver, or the like. In some embodiments, the external device 115 performs functionality other than the functionality described below.

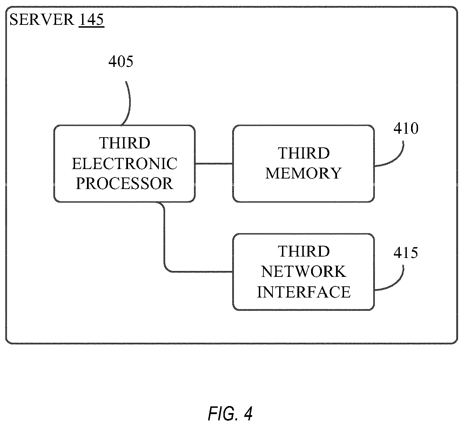

FIG. 4 is a block diagram of the server 145 according to some example embodiments. In the example shown, the server 145 includes a third electronic processor 405 electrically coupled to a third memory 410 and a third network interface 415. These components are similar to the like-named components of the robotic mower 105 explained above with respect to FIG. 2 and function in a similar manner as described above. In some embodiments, the third network interface 415 includes one or more transceivers for wireless communication of information to/from the external device 115, the docking station 110, and/or the robotic mower 105 (e.g., a third RF transceiver configured to communicate via cellular communication and/or the like). The third network interface 415 may include one or more additional transceivers for wirelessly communicating with other devices (e.g., another server 145) in the system 100 via different communication modalities. In some embodiments, at least some of the transceivers and/or receivers of the server 145 may be combined or share some elements (e.g., an antenna and/or other hardware).

In some embodiments, the server 145 includes fewer or additional components in configurations different from that illustrated in FIG. 4. For example, the server 145 may include a battery, a display or indicator (e.g., a light emitting diode) to provide information to the user, or the like. As another example, the server 145 may include an input device similar to that explained above with respect to FIGS. 2-3. In some embodiments, the server 145 performs functionality other than the functionality described below.

In some embodiments, the battery pack 117 includes similar elements as at least some of the elements described above with respect to the devices 105, 115 that function in a similar manner. For example, the battery pack 117 may include an electronic processor, a memory, and a network interface, among other elements.

Because the robotic mower 105 and the docking station 110 are usually located in an outdoor location at a property, these devices may be susceptible to theft. For example, a thief may steal or attempt to steal the robotic mower 105, a component of the robotic mower 105 such as the battery pack 117, the docking station 110, and/or the like. Accordingly, there is a technological problem with respect to robotic mowers because the convenience of leaving the robotic mower 105 and the docking station 110 at an outdoor location is at odds with the possibility of these devices be stolen.

The systems, methods, and devices described herein address the above-noted technological problem by providing anti-theft/theft prevention strategies that decrease the likelihood of the robotic mower 105, its components, and/or the docking station 110 from be stolen. The systems, methods, and devices described herein also provide strategies for reacting/responding to detected theft events and/or potential theft events in order to decrease the likelihood of theft and/or increase the likelihood of locating and/or repossessing a stolen device. Therefore, embodiments described herein enhance the usefulness of the robotic mower 105 and/or the docking station 110 by attempting to prevent theft and/or more accurately detecting and handling theft events and/or potential theft events.

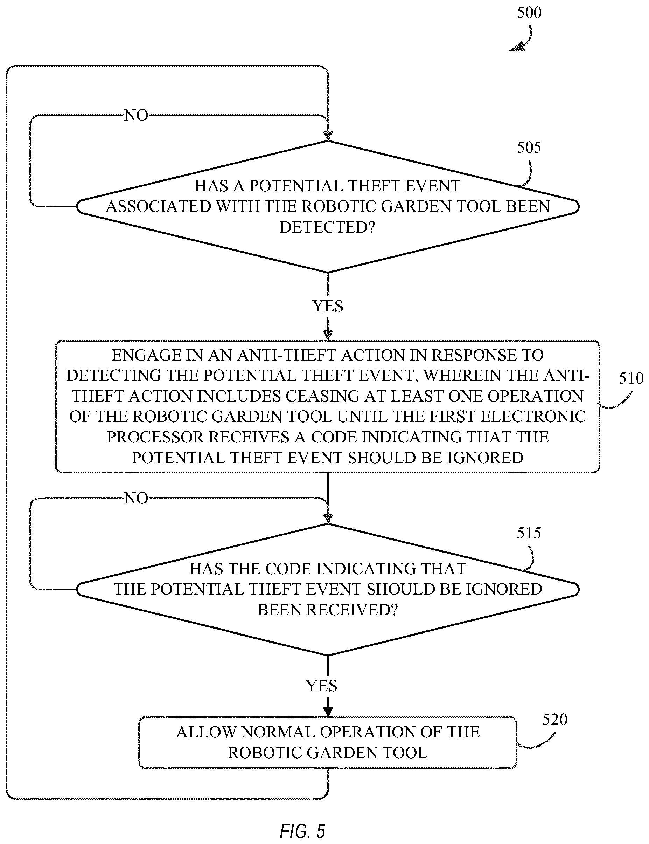

FIG. 5 illustrates a flowchart of a method 500 that may be performed by at least one of the group including the robotic mower 105, one or more external devices 115, the docking station 110, one or more servers 145, and combinations thereof to prevent theft and/or to respond to detected theft and/or possible theft of the robotic mower 105, of one or more components of the robotic mower 105, and/or of the docking station 110. While a particular order of processing steps, signal receptions, and/or signal transmissions is indicated in FIG. 5 as an example, timing and ordering of such steps, receptions, and transmissions may vary where appropriate without negating the purpose and advantages of the examples set forth in detail throughout the remainder of this disclosure.

For the sake of brevity, the explanation below primarily refers to determinations being made by the first electronic processor 205 of the robotic mower 105. However, in some instances, at least some of the determinations explained below may be made by another electronic processor of another device (e.g., the external device 115, the server 145, etc.) and instructions may be communicated to the robotic mower 105 to control the robotic mower 105 in accordance with the determinations made by the another device. In order for the another device to make such determinations, the another device may receive data from one or more other devices in the system 100 (e.g., the robotic mower 105).

Additionally, the description herein may describe devices 105, 115, 145, 110 as making determinations/calculations and/or transmitting data to and/or receiving data from other devices 105, 115, 145, 110. It should be understood that such determinations/calculations are made by the respective electronic processor 205, 305, 405 of each device. It should also be understood that the transmitting/receiving of data is performed by the electronic processor 205, 305, 405 of each device via a respective network interface 215, 315, 415 of each device.

The electronic processor(s) 205, 305, 405 that performs the actions and/or methods described herein may include any one or a combination of electronic processors located within each device or distributed among various devices. Thus, in the claims, if an apparatus or system is claimed, for example, as including an electronic processor or other element configured in a certain manner, for example, to make multiple determinations, the claim or claim element should be interpreted as meaning one or more electronic processors (or other element) where any one of the one or more electronic processors (or other element) is configured as claimed, for example, to make some or all of the multiple determinations. To reiterate, those electronic processors and processing may be distributed within a single device (e.g., the robotic mower 105) or amongst multiple devices unless otherwise specified in the claim language.

At block 505, the first electronic processor 205 of the robotic mower 105 determines whether a potential theft event associated with the robotic garden tool 105 (e.g., the robotic mower 105) has been detected. In some instances, a potential theft event may include any event that may indicate that the robotic mower 105, a component of the robotic mower 105 (e.g., the battery pack 117), and/or the docking station 110 is being accessed by any user (e.g., an unauthorized person), is functioning in an unexpected manner, and/or is located in an unexpected location. In many circumstances, a potential theft event may be detected while an authorized user is accessing the robotic mower 105. However, because such access or attempted access may be performed by unauthorized users in at least some situations, the first electronic processor 205 may nevertheless detect a potential theft event.

In some instances, the first electronic processor 205 is configured to detect a potential theft event by determining that a first measured value received from a lift sensor exceeds a first predetermined threshold, that a second measured value received from an IMU sensor exceeds a second predetermined threshold, or that both the first measured value exceeds the first predetermined threshold and the second measured value exceeds the second predetermined threshold. For example, the first predetermined threshold and the second predetermined threshold may be set such that when values from the sensors 230 are received that exceed the respective predetermined thresholds, the first electronic processor 205 determines that the robotic mower 105 has been lifted off of the ground, potentially by a thief/unauthorized user. For example, the IMU sensor may indicate that the robotic mower 105 is being moved in an upward direction (e.g., a z-axis direction of the IMU sensor). Continuing this example, the IMU sensor may indicate that the robotic mower 105 is being moved in the upward direction at a speed greater than a maximum movement speed (e.g., 0.6 meters per second) of the robotic mower 105. These example indications from the IMU sensor may allow the first electronic processor 205 to determine that a potential theft event is occurring (e.g., the robotic mower 105 being lifted off of the ground suddenly). The detection of the potential theft event in this manner may be particularly useful when an unauthorized user has manipulated other sensors (e.g., the lift sensors) to falsely indicate that the robotic mower 105 remains on the operating surface even when the robotic mower 105 has been lifted.

In some instances, the first electronic processor 205 is configured to detect a potential theft event by determining that a load of the one or more wheels 130 has changed in a manner that indicates that the one or more wheels 130 are no longer in contact with the operating surface. For example, a quick/abrupt change in the load on the one or more wheels 130 and/or the wheel motors 235 from a medium/high load to a low load may indicate that the robotic mower 105 has been lifted off of the operating surface such that the wheels 130/wheel motors 235 are spinning with very little resistance. The detection of the potential theft event in this manner may be particularly useful when an unauthorized user has manipulated other sensors (e.g., the lift sensors) to falsely indicate that the robotic mower 105 remains on the operating surface even when the robotic mower 105 has been lifted. Accordingly, wheel motor loading detection as explained above may provide an alternative manner of detecting a potential theft event (e.g., of detecting when the robotic mower 105 has been lifted off the operating surface).

In some instances, the first electronic processor 205 is configured to detect a potential theft event by determining that the "stop" button of the robotic garden tool 105 has been actuated. As explained previously herein, even though the "stop" button may be pressed by an authorized user in many instances, in some instances, the first electronic processor 205 may nevertheless detect a potential theft event in response to the "stop" button being actuated.

In some instances, the first electronic processor 205 is configured to detect a potential theft event by determining that the robotic garden tool 105 has been outside of a predetermined virtual boundary (or a certain distance away from the docking station 110) for longer than a predetermined time period. For example, the robotic mower 105 may briefly be outside the virtual boundary due to error or other circumstances. However, if the robotic mower 105 remains outside the virtual boundary (e.g., as determined by its GPS receiver included in the first network interface 215) for longer than the predetermined time period (e.g., one minutes, five minutes, or the like), the first electronic processor 205 may determine that a potential theft event is occurring. In some instances, the predetermined time period may be set to be above a time period in which the robotic mower 105 is expected to correct an "out-of-virtual-boundary" error. In some instances, the predetermined time period may be set to zero such that the first electronic processor 205 is configured to detect a potential theft event immediately upon determining that the robotic mower 105 is outside of the predetermined virtual boundary.

In some instances, the first electronic processor 205 is configured to detect a potential theft event by determining that the robotic garden tool 105 is outside of a predetermined virtual boundary (or away from the docking station 110) by a distance greater than a predetermined distance (e.g., more than ten feet, twenty feet, fifty feet, etc. outside of the virtual boundary). In some instances, the predetermined distance may be set to be above a maximum distance in which the robotic mower 105 is expected to erroneously travel outside of the virtual boundary during operation.

In some instances, the first electronic processor 205 detects a potential theft event based on determining a combination of a distance outside the virtual boundary of the robotic mower 105 (or a distance away from the docking station 110) and an amount of time in which the robotic mower 105 has been outside of the virtual boundary. In some instances, these the distance value and the time value may be inversely proportionate to each other with respect to triggering detection of a potential theft event. For example, when the robotic mower 105 is only a small distance outside of the virtual boundary, the first electronic processor 205 may not detect a potential theft event until a predetermined amount of time has elapsed. However, the first electronic processor 205 may immediately detect a potential theft event in response to the robotic mower 105 being a larger distance outside of the virtual boundary.

In some instances, the first electronic processor 205 is configured to detect the potential theft event by determining that the battery pack compartment is attempted to be accessed, that the battery pack 117 is attempted to be removed, or both that the battery pack compartment is attempted to be accessed and that the battery pack 117 is attempted to be removed. As explained previously herein with respect to the sensors 230 of the robotic mower 105, pressure and/or contact sensors may be included on/in the battery pack compartment, a door/cover of the battery pack compartment, terminals of the robotic mower 105 configured to couple to the battery pack 117, the battery pack 117 itself, and/or the like to determine when a user is attempting to access the battery pack compartment and/or attempting to remove the battery pack 117.

In instances where the system 100 includes a security camera configured to monitor an expected location of the robotic garden tool 105, the first electronic processor 205, another electronic processor located remote from the robotic garden tool 105 (e.g., the second electronic processor 305 of the security camera or another external device 115, the third electronic processor 405 of the server 145, and/or the like), or both the first electronic processor 205 and the another electronic processor may be configured to detect a potential theft event in response to determining that the robotic garden tool 105 and/or the docking station 110 is not located in an expected location. In some instances, the first electronic processor 205 and/or the another electronic processor may be configured to analyze, using an image analysis technique, image data captured by the security camera. The first electronic processor 205 and/or the another electronic processor may also be configured to determine, based at least partially on the image analysis of the image data, that the robotic garden tool 105 and/or the docking station 110 is not located in the expected location.

For example, the first electronic processor 205 and/or the another electronic processor may be configured to use object recognition to recognize a human carrying an object in the image data. The first electronic processor 205 and/or the another electronic processor may also be able to use facial recognition to determine an identity of the human. The first electronic processor 205 and/or the another electronic processor may then compare the identity of the human to known identities of authorized users that are pre-programmed in a memory 210, 310, 410 of one or more devices in the system 100. In response to the identity of the human included in the image data not matching a known identity of an authorized user, the first electronic processor 205 and/or the another electronic processor may detect a potential theft event.

As another example, the first electronic processor 205 and/or the another electronic processor may not perform facial recognition and may detect a potential theft event in response to determining, using object recognition, that the robotic mower 105 and/or the docking station 110 is located off of the ground (e.g., being carried by a person).

As another example, the security camera may be configured to communicate with the robotic mower 105 and/or the docking station 110, for example, to receive status information including an indication of when the robotic mower 105 is operating versus when the robotic mower 105 is docked, for example, for charging purposes. The security camera (e.g., security camera 605 as shown in FIG. 6) may also be configured to detect the presence of one or more fiducial markers 610 (e.g., a binary square fiducial marker such as an Augmented Reality University of Cordoba (ArUco) marker) located on the docking station 110 and/or the robotic mower 105. For example, as shown in FIG. 6, the security camera 605 may be located such that its field of view includes a first fiducial marker 610A on the robotic mower 105 when the robotic mower 105 is docked and a second fiducial marker 610B on the docking station 110 when the robotic mower 105 is operating away from the docking station 110. In some instances, the second fiducial marker 610B may be blocked by the robotic mower 105 when the robotic mower 105 is docked at the docking station 110 such that the security camera 605 may only view one fiducial marker 610 at a time. Because the security camera 605 may also receive status information of the robotic mower 105, the security camera 605 may be configured to determine whether the presence or absence of each fiducial marker 610 in captured image data should trigger detection of a potential theft event. For example, if the status information indicates that the robotic mower 105 is docked at the docking station 110 but the captured image data includes only the second fiducial marker 610B of the docking station 110 that is blocked by the robotic mower 105 when the robotic mower 105 is docked, an electronic processor of the security camera 605 may detect a potential theft event in response thereto.

The above-explained detection of a potential theft event using image data captured by the security camera 605 may alternatively be performed by other electronic processors in the system 100. For example, the first electronic processor 205 may make such a determination after receiving image data from the security camera 605 or information indicative of analyzed image data from the security camera 605 or another device. As another example, another device (e.g., another external device 115 and/or the server 145) may make such a determination after receiving status information of the robotic mower 105 and image data or information indicative of analyzed image data from the security camera 605. In response to another device detecting a potential theft event, the another device may transmit a signal indicating such detection to the robotic mower 105.

With reference to FIG. 5, when the first electronic processor 205 has not detected a potential theft event associated with the robotic mower 105 (at block 505), the method 500 remains at block 505 such that the first electronic processor 205 continuously or periodically monitors for a potential theft event. In some instances, the first electronic processor 205 may execute block 505 as a background process such that other operations of the robotic mower 105 are able to occur while block 505 is occurring. For example, the first electronic processor 205 may execute block 505 while the robotic mower 105 is operating to perform a task (e.g., mowing a lawn), while the robotic mower 105 is no longer performing the task but is moving toward the docking station 110 to dock, while the robotic mower 105 is docked at the docking station 110 and is charging or not charging, a combination thereof, or at any other time in which the robotic mower 105 is operational or not operational.

When the first electronic processor 205 detects a potential theft event associated with the robotic mower 105 (at block 505), the method 500 proceeds to block 510. At block 510, the first electronic processor 205 engages in an anti-theft action in response to detecting the potential theft event. In some instances, the anti-theft action includes ceasing at least one operation of the robotic garden tool 105 until the first electronic processor 205 receives a code (i.e., a matching authorization code) indicating that the potential theft event should be ignored. In some instances (e.g., in instances in which the robotic mower 105 is actively engaging in one or more operations when the potential theft event is detected), ceasing at least one operation of the robotic mower 105 includes stopping a current operation of the robotic mower 105 (e.g., stopping one or more of the motors 235, 240, etc.). In some instances (e.g., in instances in which the robotic mower 105 is not actively engaging in any operation when the potential theft event is detected), ceasing at least one operation of the robotic mower 105 includes preventing a future operation of the robotic mower 105 (e.g., preventing the robotic mower 105 from moving away from the docking station 110, preventing use of one or more of the motors 235, 240, etc., and/or the like).

In some instances, the code is one or more personal identification numbers (PINs) that an authorized user of the robotic mower 105 has pre-programmed into the robotic mower 105 and/or an external device 115 configured to communicate with the robotic mower 105. As explained previously herein, in some circumstances, a detected potential theft event may actually be authorized by the user or may be the user themselves attempting to adjust or transport the robotic mower 105. Accordingly, entering of the code into the user interface of the robotic mower 105 and/or the external device 115 (e.g., within an application on a smart phone configured to communicate with the robotic mower 105) may allow the robotic mower 105 to determine that the potential theft event should be ignored because it is an authorized event. Along similar lines, if the potential theft event was unauthorized but the owner of the robotic mower 105 has since inspected the robotic mower 105 and/or would like to continue operation of the robotic mower 105, entering the code allows the robotic mower 105 to ignore the previously detected potential theft event and continue normal operation.

As indicated by the explanation above, in some instances, the first electronic processor 205 receives a code from the first input device 220 of the robotic mower 105 in response to a first user input being received by the first input device 220. The first electronic processor 205 may then compare the code to one or more previously-stored and authorized codes to determine whether the user-entered code matches any of the authorized codes. In some instances, the first electronic processor 205 receives a code via the first network interface 215 from the external device 115 in response to the code being received by the external device 115 via a first user input on the external device 115. In such instances, the owner of the robotic mower 105 does not need to enter the code on the first input device 220 of the robotic mower 105, for example, if they can see from inside of their house that the robotic mower 105 is not being tampered with. In some instances, the first electronic processor 205 receiving the code that indicates that potential theft event should be ignored includes receiving an indication that an authorized code has been received on another device (e.g., the external device 115). In other words, the first electronic processor 205 may compare a user-entered code to authorized codes, and/or another device (e.g., the external device 115) may compare a user-entered code to authorized codes and then send an indication to the robotic mower 105 to indicate the result of the comparison.

In some instances, at block 510, the at least one operation of the robotic garden tool 105 that is ceased includes operation of the at least one wheel motor 235, operation of the task motor 240, or both the operation of the at least one wheel motor 235 and the operation of the task motor 240. In some instances, at block 510, the anti-theft action includes the first electronic processor 205 controlling the at least one wheel motor 235 to move the robotic garden tool 105 toward the docking station 110 to dock at the docking station 110. In some instances, at block 510, the anti-theft action includes controlling a user interface (e.g., the first display 225) of the robotic garden tool 105 to prompt a user to enter an authorized code, for example, in order to access the battery pack 117 and/or to allow the robotic garden tool 105 to ignore the potential theft event and return to functioning normally (i.e., discontinue the anti-theft action(s) engaged in at block 510).

In some instances, the anti-theft action includes at least one of the group including controlling the robotic mower 105 to output a high decibel (dB) alarm via a speaker or other output device, controlling the robotic mower 105 to solidly illuminate or flash one or more light-emitting diodes (LEDs), controlling at least a portion of the first display 225 to indicate that a potential theft event has been detected and that the robotic mower 105 will not function until an authorized code is entered, and combinations thereof. In some instances, the anti-theft action includes the robotic mower 105 transmitting a notification to the external device 115 and/or the server 145. The notification may include a GPS location of the robotic mower 105. Upon receipt of the notification from the robotic mower 105, the external device 115 may be configured to initiate a push notification to attempt to notify the user of the detected potential theft event. In some instances, the server 145 may be configured to relay the notification to one or more external devices 115. In some instances, the robotic mower 105 may include an anti-theft logo located in one or more areas on an outside of the outer housing 125A to indicate to unauthorized users that the robotic mower 105 has anti-theft capabilities. Such a logo may discourage theft of the robotic mower 105.

In some instances, at block 510, the anti-theft action includes the robotic mower 105 increasing a transmission rate of a status message and/or including an additional type of information in the status message in response to the potential theft event being detected compared to when a potential theft event has not been detected. For example, the first electronic processor 205 may be configured to periodically transmit, via the first network interface 215, a first status message to the external device 115 (and/or the server 145) at a first message rate prior to a potential theft event being detected. Continuing this example, the first electronic processor 205 may be configured to periodically transmit a second status message to the external device 115 (and/or the server 145) at a second message rate that is higher than the first message rate in response to detecting a potential theft event. Additionally, the second status message may include an additional type of information (e.g., a location of the robotic mower 105 as determined by its GPS receiver) that is not included in the first status message. In other words, certain types of information (e.g., GPS location) may only be determined by the robotic mower 105 and/or sent in the status message when the robotic mower 105 has detected a potential theft event in order to save power and/or communication bandwidth associated with determining such information and transmitting such information. Similarly, transmitting the first status message at a lower transmission rate saves power and communication bandwidth by not always transmitting status messages at a higher transmission rate.

In some instances, the second status message can be transmitted even when the detected potential theft event relates to removal of the battery pack 117 and the battery pack 117 has been removed. In such situations, the backup battery 245 may provide power to the first network interface 215 and at least a portion of the first electronic processor 205 when the battery pack 117 is not located in the battery pack compartment. In some instances, the second status message includes a time at which the potential theft event (e.g., removal of the battery pack 117) was detected.

In some instances, at block 510, the anti-theft action includes locking a battery pack lock or maintaining the battery pack lock in a locked position until a first authorized code (i.e., a first code) or a second authorized code (i.e., a second code) is received by the first electronic processor 205. In some instances, the first authorized code may be a general code configured to indicate that any one of a plurality of detected potential theft events should be ignored. In some instances, the second authorized code may be a different code that is specific to accessing the battery pack 117 (e.g., to be able to remove the battery pack 117). In some instances, the battery pack lock is configured to unlock (at block 520) in response to the first authorized code or the second authorized code being received by the first electronic processor 205 (at block 515).

In some instances, the first electronic processor 205 is configured to control whether the battery pack lock is in a locked position or an unlocked position by controlling a secondary motor (not shown) coupled to a locking device of the battery pack lock. For example, the secondary motor may include a servo motor configured to rotate the locking device (e.g., a latch) to prevent/allow access to the battery pack 117 and/or to prevent/allow removal of the battery pack 117 from the battery pack compartment. For example, the battery pack lock may include a first lock configured to lock a door of the battery compartment, a second lock configured to lock first terminals of the battery pack 117 to second terminals of the battery pack compartment of the robotic garden tool 105, or both the first lock and the second lock. The first and second locks may have separate secondary motors that are controllable by the first electronic processor 205.

In some instances, in addition to or as an alternative to the battery pack lock described above that is controlled by the first electronic processor 205, the battery pack compartment includes a second battery pack lock configured to remain locked until the first authorized code, the second authorized code, or a third authorized code is received by the second battery pack lock via a manual user input. The second battery pack lock may be configured to unlock in response to the first authorized code, the second authorized code, or the third authorized code being received by the second battery pack lock via the manual user input. For example, the second battery pack lock may include rotating wheels/mechanisms that each include numbers to allow for a code to be entered by a user by rotating the wheels/mechanisms. Upon the proper code being aligned using the wheels/mechanisms, the second battery pack lock may unlock to allow access to the battery pack 117 via the door of the battery compartment and/or to allow the battery pack 117 to be removed by releasing a terminal lock. In instances in which the robotic mower 105 includes a first battery pack lock controlled by the first electronic processor 205 and a second battery pack lock configured to receive a code via manual user input, the codes used to unlock each battery pack lock may be the same or different.

In some instances, the battery pack compartment includes a battery pack lock that includes a tool receiving portion configured to receive a non-standardized tool. For example, a non-standardized tool may include a uniquely shaped protrusion configured to fit inside a corresponding tool receiving portion as opposed to a standard screw/screwdriver combination. The uniquely shaped protrusion and the tool receiving portion may be in the shape of a triangle or other shape that is not typically used in a screw/screwdriver combination. The battery pack compartment may utilize standard screws to secure some portions of the door and/or the battery pack lock to the battery compartment/battery pack 117. However, the battery pack compartment may additionally include the tool receiving portion that is configured to receive a non-standardized tool. In some instances, the battery pack lock is configured to remain locked until the non-standardized tool is received in the tool receiving portion and rotated. The battery pack lock may also be configured to unlock in response to the non-standardized tool being received in the tool receiving portion and rotated. Using a non-standardized tool and a corresponding tool receiving portion may deter theft of the battery pack 117 by making the battery pack 117 more difficult to access and/or be removed from the battery pack compartment.

With reference to FIG. 5, after the first electronic processor 205 engages in one or more anti-theft actions (at block 510), the method 500 proceeds to block 515. At block 515, the first electronic processor 205 determines whether a code (i.e., an authorized code) indicating that the potential theft event should be ignored has been received by the first electronic processor 205 and/or another device (e.g., the external device 115) in the system 100. When such a code has not been received, the method 500 remains at block 515 where the first electronic processor 205 may continue to engage in the anti-theft action(s). When an authorized code has been received, the method 500 proceeds to block 520.

At block 520, the first electronic processor 205 allows normal operation of the robotic garden tool 105. For example, the first electronic processor 205 may cease engagement of the anti-theft action(s) such that one or more previously ceased operations of the robotic mower 105 may continue in the manner in which they were occurring before the potential theft event was detected. In some instances, at block 520, the first electronic processor 205 is configured to unlock one or more locks (e.g., one or more battery pack locks) to allow access to or removal of the battery pack 117. Such unlocking may occur only for a predetermined limited time until the lock(s) is again placed in the locked position.

In some circumstances, an authorized user of the robotic mower 105 may desire for the robotic mower 105 to engage in one or more anti-theft actions even though a potential theft event has not been detected. For example, if the user is leaving their home, they may desire for the robotic mower 105 to engage in one or more anti-theft actions to discourage theft of the robotic mower 105 while they are away from their home. Accordingly, in some instances, the first electronic processor 205 is configured to receive a lock command from the external device 115, and cease or prevent at least one operation of the robotic mower 105 in response to receiving the lock command. In a similar manner, the first electronic processor 205 may be configured to receive an unlock command from the external device 115, and allow the at least one operation of the robotic garden tool 105 in response to receiving the unlock command. The lock/unlock command may be transmitted by the external device 115 to the robotic mower 105 in response to the external device 115 receiving a user input (e.g., actuation of a soft button displayed on the second display 325). As indicated previously herein, in some instances, the external device 115 is a smart phone or another device carried by a user. In some instances, the external device 115 is another device mounted near an entry/exit point of a user's home and may include a user interface configured to receive user inputs relating to the lock/unlock command (e.g., when the user is leaving or exiting their home) that are communicated in commands/instructions to the robotic mower 105.

In any situation in which one or more operations/functions of the robotic mower 105 is locked/disabled for any reason, the robotic mower 105 may provide an output to indicate that the one or more operations/functions are locked/disabled. For example, the robotic mower 105 may solidly illuminate or flash one or more LEDs and/or may display locked/disabled functionality information on the first display 225. Such output of information may discourage unauthorized users from attempting to steal the robotic mower 105 since at least some its operations/functions are locked/disabled.

In some instances, the external device 115 may provide a user interface (e.g., on the second display 325) that allows the user to select any one of a plurality of operations to lock/unlock (e.g., control of the one or more wheel motors 235, control of the task motor 240, etc.). The external device 115 may also provide a user interface that allows the user to select a security level implemented the robotic mower 105. For example, the robotic mower 105 may receive instructions from the external device 115 that indicate how the robotic mower 105 should detect potential theft events (e.g., which potential theft events described herein should be considered potential theft events that require an authorized code to be entered and which potential theft events described herein should be ignored without requiring an authorized code to be entered). For example, certain users who frequently change their battery packs 117 may not desire the robotic mower 105 to detect a potential theft event each time the battery pack 117 is attempted to be accessed. As another example, some users may not want to implement detection of potential theft events at all. In some instances, the robotic mower 105 may receive instructions from the external device 115 that indicate how the robotic mower 105 should respond to detected potential theft events. For example, the robotic mower 105 may be configured to respond to all potential theft events in the same manner and/or may be configured to respond to different potential theft events in different manners. In some instances, the robotic mower 105 may receive instructions from the external device 115 that indicate values for the predetermined thresholds described previously herein that cause a potential theft event to be detected. Accordingly, a security level of the robotic mower 105 (e.g., how potential theft events are detected and handled) may be customized by different users depending on different circumstances.

In some instances, the docking station 110 may be integrated into a docking station housing (e.g., similar to a doghouse) that includes heavy peg mounts that are mounted in the ground. The docking station housing (not shown) may be made of a heavy material (e.g., metal). The heavy pegs may be thicker and more difficult to remove from the ground than the stakes 120 shown in FIG. 1A. The docking station housing may include a door that is configured to be closed and locked when the robotic mower 105 is docked at the docking station 110 inside the docking station housing. The door may be closed and locked by controlling (e.g., with an electronic processor of the docking station 110) one or more servo motors in a similar manner as described previously herein with respect to the battery pack lock of the robotic mower 105. Accordingly, the docking station housing may provide additional security for the robotic mower 105 when the robotic mower 105 is docked at the docking station 110 inside the docking station housing. The docking station housing additionally provides security for the docking station 110 since the docking station 110 is more securely mounted in the ground and is less accessible to unauthorized users.

## Claims

1. A theft prevention system comprising:
a robotic garden tool (105) including
a housing (125, 125A, 125B),
a set of wheels (130, 130A, 130B) coupled to the housing (125, 125A, 125B) and configured to rotate to propel the robotic garden tool (105) on an operating surface,
at least one wheel motor (235, 235A, 235B) coupled to one or more wheels (130A) of the set of wheels (130, 130A, 130B), the at least one wheel motor (235, 235A, 235B) configured to drive rotation of the one or more wheels (130A),
one or more sensors (230), and
a first electronic processor (205) configured to
detect, using the one or more sensors (230), a potential theft event associated with the robotic garden tool (105), and
engage in an anti-theft action in response to detecting the potential theft event, wherein the anti-theft action includes ceasing at least one operation of the robotic garden tool (105) until the first electronic processor (205) receives a code indicating that the potential theft event should be ignored,
the theft prevention system being **characterized in that** the one or more sensors (230) includes a lift sensor and inertial measurement unit (IMU), wherein the first electronic processor (205) is configured to detect the potential theft event by determining that a first measured value received from the lift sensor exceeds a first predetermined threshold, that a second measured value received from the inertial measurement unit (IMU) sensor exceeds a second predetermined threshold, or that both the first measured value exceeds the first predetermined threshold and the second measured value exceeds the second predetermined threshold.

2. The theft prevention system of claim 1, wherein the robotic garden tool (105) includes a user input device (220), and wherein the first electronic processor (205) is configured to receive the code from the user input device (220) in response to a first user input being received by the user input device (220);
optionally, the robotic garden tool (105) includes a first network interface (215), and an external device (115) including a second network interface (315) is configured to communicate with a first network interface (215) of the robotic garden tool (105), wherein the first network interface (215) is coupled to the first electronic processor (205);
wherein the first electronic processor (205) is configured to receive the code via the first network interface (215) in response to the code being received by the external device (115) via a second user input device (320) on the external device (115).

3. The theft prevention system of claim 1, wherein the robotic garden tool (105) includes a battery pack compartment configured to removably receive a battery pack (117) that is configured to provide power to the at least one wheel motor (235, 235A, 235B);
wherein the battery compartment includes a battery pack lock configured to
remain locked until the code or a second code is received by the first electronic processor (205), and
unlock in response to the code or the second code being received by the first electronic processor (205).

4. The theft prevention system of claim 3, wherein the battery pack lock includes a first lock configured to lock a door of the battery compartment, a second lock configured to lock first terminals of the battery pack (117) to second terminals of the battery pack compartment of the robotic garden tool, or both the first lock and the second lock.

5. The theft prevention system of claim 3, wherein the first electronic processor (205) is configured to control whether the battery pack lock is in a locked position or an unlocked position by controlling a secondary motor coupled to a locking device of the battery pack lock.

6. The theft prevention system of claim 1, wherein the robotic garden tool (105) includes a battery pack compartment configured to removably receive a battery pack (117) that is configured to provide power to the at least one wheel motor (235, 235A, 235B);
wherein the battery compartment includes a battery pack lock configured to
remain locked until the code or a second code is received by the battery pack lock via a manual user input, and
unlock in response to the code or the second code being received by the battery pack lock via the manual user input.

7. The theft prevention system of claim 1, wherein the robotic garden tool (105) includes a battery pack compartment configured to removably receive a battery pack (117) that is configured to provide power to the at least one wheel motor (235, 235A, 235B);
wherein the battery compartment includes a battery pack lock including a tool receiving portion configured to receive a non-standardized tool; and
wherein the battery pack lock is configured to
remain locked until the non-standardized tool is received in the tool receiving portion and rotated, and
unlock in response to the non-standardized tool being received in the tool receiving portion and rotated.

8. The theft prevention system of claim 1, wherein:
the one or more sensors (230) includes a "stop" button, and the first electronic processor (205) is configured to detect the potential theft event by determining that the "stop" button of the robotic garden tool (105) has been actuated;
the first electronic processor (205) is configured to detect the potential theft event by determining that a load of the one or more wheels (130A) has changed in a manner that indicates that the one or more wheels (130A) are no longer in contact with the operating surface;
the first electronic processor (205) is configured to detect the potential theft event by determining that the robotic garden tool (105) has been outside of a predetermined virtual boundary for longer than a predetermined time period; and/or
the first electronic processor (205) is configured to detect the potential theft event by determining that the robotic garden tool (105) is outside of a predetermined virtual boundary by a distance greater than a predetermined distance.

9. The theft prevention system of claim 1, wherein the robotic garden tool (105) includes a battery pack compartment configured to receive a battery pack (117) that is configured to provide power to the at least one wheel motor (235, 235A, 235B); and
wherein the first electronic processor (205) is configured to detect the potential theft event by determining that the battery pack compartment is attempted to be accessed, that the battery pack (117) is attempted to be removed, or both that the battery pack compartment is attempted to be accessed and that the battery pack (117) is attempted to be removed.

10. The theft prevention system of claim 9, wherein the anti-theft action includes controlling a user interface of the robotic garden tool (105) to prompt a user to enter the code in order to access the battery pack (117).

11. The theft prevention system of claim 1, wherein the robotic garden tool (105) includes a task motor (240) configured to drive rotation of a working element (135) configured to perform a task; and
wherein the at least one operation of the robotic garden tool (105) that is ceased includes operation of the at least one wheel motor (235, 235A, 235B), operation of the task motor (240), or both the operation of the at least one wheel motor (235, 235A, 235B) and the operation of the task motor (240).

12. The theft prevention system of claim 1, wherein the anti-theft action includes the first electronic processor (205) controlling the at least one wheel motor (235, 235A, 235B) to move the robotic garden tool (105) toward a docking station (110) to dock at the docking station (110).

13. The theft prevention system of claim 1, wherein the robotic garden tool (105) includes
a first network interface (215) configured to allow the first electronic processor (205) to communicate with an external device (115);
a battery pack compartment configured to removably receive a battery pack (117) that is configured to provide power to the at least one wheel motor (235, 235A, 235B), the first electronic processor (205), and the first network interface (215); and
a backup battery (245) configured to provide power to the first network interface (215) and at least a portion of the first electronic processor (205) when the battery pack (117) is not located in the battery pack compartment;
wherein the first electronic processor (205) is configured to
periodically transmit a first status message to the external device (115) at a first message rate prior to the potential theft event being detected, and
periodically transmit a second status message to the external device (115) at a second message rate that is higher than the first message rate in response to detecting the potential theft event.

14. The theft prevention system of claim 1, further comprising an external device (115) configured to communicate with the robotic garden tool (105), wherein the first electronic processor (205) is configured to:
receive a lock command from the external device (115);
cease or prevent the at least one operation of the robotic garden tool (105) in response to receiving the lock command;
receive an unlock command from the external device (115);
allow the at least one operation of the robotic garden tool (105) in response to receiving the unlock command.

15. The theft prevention system of claim 1, wherein the one or more sensors (230) includes a security camera (605) configured to monitor an expected location of the robotic garden tool (105), wherein the first electronic processor (205), a second electronic processor (305) located remote from the robotic garden tool (105), or both the first electronic processor (205) and the second electronic processor (305) are configured to:
analyze, using an image analysis technique, image data captured by the security camera (605);
determine, based at least partially on the image analysis of the image data, that the robotic garden tool (105) is not located in the expected location; and
detect the potential theft event in response to determining that the robotic garden tool (105) is not located in the expected location.

## Patentansprüche

1. Diebstahlschutzsystem, umfassend:
ein Roboter-Gartengerät (105), enthaltend:
ein Gehäuse (125, 125A, 125B),
einen Satz Räder (130, 130A, 130B), die mit dem Gehäuse (125, 125A, 125B) verbunden und dazu ausgelegt sind, sich zu drehen, um das Roboter-Gartengerät (105) auf einer Arbeitsfläche anzutreiben,
zumindest einen Radmotor (235, 235A, 235B), der mit einem oder mehreren Rädern (130A) des Satzes von Rädern (130, 130A, 130B) verbunden ist, wobei der zumindest eine Radmotor (235, 235A, 235B) dazu ausgelegt ist, die Drehung des einen oder der mehreren Räder (130A) zu bewirken,
einen oder mehrere Sensoren (230) und
einen ersten elektronischen Prozessor (205), der ausgelegt ist zum
Erkennen eines potenziellen Diebstahlereignis im Zusammenhang mit dem Roboter-Gartengerät (105) unter Verwendung des einen oder der mehreren Sensoren (230), und
Einleiten einer Diebstahlschutzmaßnahme als Reaktion auf die Erkennung des potenziellen Diebstahlereignisses, wobei die Diebstahlschutzmaßnahme das Unterbrechen zumindest eines Betriebs des Roboter-Gartengeräts (105) solange umfasst, bis der erste elektronische Prozessor (205) einen Code empfängt, der angibt, dass das potenzielle Diebstahlereignis ignoriert werden soll,
wobei das Diebstahlschutzsystem **dadurch gekennzeichnet ist, dass**
der eine oder die mehreren Sensoren (230) einen Hebesensor und eine Trägheitsmesseinheit (IMU) umfassen, wobei der erste elektronische Prozessor (205) dazu ausgelegt ist, das potenzielle Diebstahlereignis zu erkennen, indem er feststellt, dass ein erster vom Hebesensor empfangener Messwert einen ersten vorbestimmten Schwellenwert überschreitet, oder dass ein vom Sensor der Trägheitsmesseinheit (IMU) empfangener zweiter Messwert einen zweiten vorbestimmten Schwellenwert überschreitet, oder dass sowohl der erste Messwert den ersten vorbestimmten Schwellenwert überschreitet als auch der zweite Messwert den zweiten vorbestimmten Schwellenwert überschreitet.

2. Diebstahlschutzsystem nach Anspruch 1,
wobei das Roboter-Gartengerät (105) eine Benutzereingabevorrichtung (220) umfasst und wobei der erste elektronische Prozessor (205) dazu ausgelegt ist, den Code von der Benutzereingabevorrichtung (220) als Reaktion auf den Empfang einer ersten Benutzereingabe durch die Benutzereingabevorrichtung (220) zu empfangen;
wobei optional das Roboter-Gartengerät (105) eine erste Netzwerkschnittstelle (215) umfasst, und wobei ein externes Gerät (115) mit einer zweiten Netzwerkschnittstelle (315) dazu ausgelegt ist, mit einer ersten Netzwerkschnittstelle (215) des Roboter-Gartengeräts (105) zu kommunizieren, wobei die erste Netzwerkschnittstelle (215) mit dem ersten elektronischen Prozessor (205) gekoppelt ist;
wobei der erste elektronische Prozessor (205) dazu ausgelegt ist, den Code über die erste Netzwerkschnittstelle (215) als Reaktion auf den Empfang des Codes durch das externe Gerät (115) über eine zweite Benutzereingabevorrichtung (320) an dem externen Gerät (115) zu empfangen.

3. Diebstahlschutzsystem nach Anspruch 1,
wobei das Roboter-Gartengerät (105) ein Batteriepack-Fach umfasst, das dazu ausgelegt ist, ein Batteriepack (117) abnehmbar aufzunehmen, das dazu ausgelegt ist, den zumindest einen Radmotor (235, 235A, 235B) mit Strom zu versorgen;
wobei das Batterie-Fach eine Batteriepack-Verriegelung umfasst, die dazu ausgelegt ist,
solange verriegelt zu bleiben, bis der Code oder ein zweiter Code durch den ersten elektronischen Prozessor (205) empfangen wird, und
sich in Reaktion auf den Empfang des Codes oder des zweiten Codes durch den ersten elektronischen Prozessor (205) zu entriegeln.

4. Diebstahlschutzsystem nach Anspruch 3,
wobei die Batteriepack-Verriegelung eine erste Verriegelung zum Verriegeln einer Klappe des Batterie-Fachs oder eine zweite Verriegelung zum Verriegeln von ersten Anschlüssen des Batteriepacks (117) mit zweiten Anschlüssen des Batteriepack-Fachs des Roboter-Gartengeräts, oder sowohl die erste Verriegelung als auch die zweite Verriegelung umfasst.

5. Diebstahlschutzsystem nach Anspruch 3,
wobei der erste elektronische Prozessor (205) dazu ausgelegt ist, durch Ansteuern eines mit einer Verriegelungsvorrichtung der Batteriepack-Verriegelung gekoppelten Sekundärmotors zu prüfen, ob sich die Batteriepack-Verriegelung in einer verriegelten Position oder einer entriegelten Position befindet.

6. Diebstahlschutzsystem nach Anspruch 1,
wobei das Roboter-Gartengerät (105) ein Batteriepack-Fach umfasst, das dazu ausgelegt ist, ein Batteriepack (117) abnehmbar aufzunehmen, das dazu ausgelegt ist, den zumindest einen Radmotor (235, 235A, 235B) mit Strom zu versorgen;
wobei das Batterie-Fach eine Batteriepack-Verriegelung umfasst, die dazu ausgelegt ist,
solange verriegelt zu bleiben, bis der Code oder ein zweiter Code durch die Batteriepack-Verriegelung über eine manuelle Benutzereingabe empfangen wird, und
sich in Reaktion auf den Empfang des Codes oder des zweiten Codes durch die Batteriepack-Verriegelung über die manuelle Benutzereingabe zu entriegeln.

7. Diebstahlschutzsystem nach Anspruch 1,
wobei das Roboter-Gartengerät (105) ein Batteriepack-Fach umfasst, das dazu ausgelegt ist, ein Batteriepack (117) abnehmbar aufzunehmen, das dazu ausgelegt ist, den zumindest einen Radmotor (235, 235A, 235B) mit Strom zu versorgen;
wobei das Batterie-Fach eine Batteriepack-Verriegelung umfasst, die einen Werkzeugaufnahmeabschnitt umfasst, der dazu ausgelegt ist, ein nicht standardisiertes Werkzeug aufzunehmen; und
wobei die Batteriepack-Verriegelung dazu ausgelegt ist,
solange verriegelt zu bleiben, bis das nicht standardisierte Werkzeug in den Werkzeugaufnahmeabschnitt aufgenommen und gedreht ist, und
sich in Reaktion auf das Aufnehmen und Drehen des nicht standardisierten Werkzeugs in dem Werkzeugaufnahmeabschnitt zu entriegeln.

8. Diebstahlschutzsystem nach Anspruch 1, wobei
der eine oder die mehreren Sensoren (230) eine "Stopp"-Taste umfassen und der erste elektronische Prozessor (205) dazu ausgelegt ist, das potenzielle Diebstahlereignis zu erkennen, indem er feststellt, dass die "Stopp"-Taste des Roboter-Gartengeräts (105) betätigt wurde;
der erste elektronische Prozessor (205) dazu ausgelegt ist, das potenzielle Diebstahlereignis zu erkennen, indem er feststellt, dass sich die Belastung des einen oder der mehreren Räder (130A) in einer Weise verändert hat, die darauf hindeutet, dass das eine oder die mehreren Räder (130A) nicht mehr in Kontakt mit der Arbeitsfläche stehen;
der erste elektronische Prozessor (205) dazu ausgelegt ist, das potenzielle Diebstahlereignis zu erkennen, indem er feststellt, dass sich das Roboter-Gartengerät (105) länger als eine vorbestimmte Zeitspanne außerhalb einer vorbestimmten virtuellen Grenze befindet; und/oder
der erste elektronische Prozessor (205) dazu ausgelegt ist, das potenzielle Diebstahlereignis zu erkennen, indem er feststellt, dass sich das Roboter-Gartengerät (105) um einen Abstand, der größer ist als ein vorbestimmter Abstand, außerhalb einer vorbestimmten virtuellen Grenze befindet.

9. Diebstahlschutzsystem nach Anspruch 1,
wobei das Roboter-Gartengerät (105) ein Batteriepack-Fach zum Aufnehmen eines Batteriepacks (117) umfasst, das dazu ausgelegt ist, den zumindest einen Radmotor (235, 235A, 235B) mit Strom zu versorgen; und
wobei der erste elektronische Prozessor (205) dazu ausgelegt ist, das potenzielle Diebstahlereignis zu erkennen, indem er feststellt, dass versucht wird, auf das Batteriepack-Fach zuzugreifen, oder dass versucht wird, das Batteriepack (117) zu entfernen, oder dass sowohl versucht wird, auf das Batteriepack-Fach zuzugreifen, als auch dass versucht wird, das Batteriepack (117) zu entfernen.

10. Diebstahlschutzsystem nach Anspruch 9,
wobei die Diebstahlschutzmaßnahme das Ansteuern einer Benutzerschnittstelle des Roboter-Gartengeräts (105) umfasst, um einen Benutzer zur Eingabe des Codes aufzufordern, um auf das Batteriepack (117) zugreifen zu können.

11. Diebstahlschutzsystem nach Anspruch 1,
wobei das Roboter-Gartengerät (105) einen Funktionsmotor (240) umfasst, der dazu ausgelegt ist, die Drehung eines Arbeitselements (135) zum Ausführen einer Funktion zu bewirken; und
wobei der zumindest eine Betrieb des Roboter-Gartengeräts (105), der unterbrochen wird, den Betrieb des zumindest einen Radmotors (235, 235A, 235B) oder den Betrieb des Funktionsmotors (240) oder sowohl den Betrieb des zumindest einen Radmotors (235, 235A, 235B) als auch den Betrieb des Funktionsmotors (240) umfasst.

12. Diebstahlschutzsystem nach Anspruch 1,
wobei die Diebstahlschutzmaßnahme umfasst, dass der erste elektronische Prozessor (205) den zumindest einen Radmotor (235, 235A, 235B) so ansteuert, dass das Roboter-Gartengerät (105) sich in Richtung einer Andockstation (110) bewegt, um an der Andockstation (110) anzudocken.

13. Diebstahlschutzsystem nach Anspruch 1,
wobei das Roboter-Gartengerät (105) umfasst:
eine erste Netzwerkschnittstelle (215), die so ausgelegt ist, dass der erste elektronische Prozessor (205) mit einem externen Gerät (115) kommunizieren kann;
ein Batteriepack-Fach, das dazu ausgelegt ist, ein Batteriepack (117) abnehmbar aufzunehmen, das dazu ausgelegt ist, den zumindest einen Radmotor (235, 235A, 235B), den ersten elektronischen Prozessor (205) und die erste Netzwerkschnittstelle (215) mit Strom zu versorgen; und
eine Pufferbatterie (245), die dazu ausgelegt ist, die erste Netzwerkschnittstelle (215) und zumindest einen Teil des ersten elektronischen Prozessors (205) mit Strom zu versorgen, wenn sich das Batteriepack (117) nicht in dem Batteriepack-Fach befindet;
wobei der erste elektronische Prozessor (205) dazu ausgelegt ist,
vor der Erkennung des potenziellen Diebstahlereignisses periodisch eine erste Statusmeldung mit einer ersten Meldungsrate an das externe Gerät (115) zu senden und
als Reaktion auf die Erkennung des potenziellen Diebstahlereignisses periodisch eine zweite Statusmeldung mit einer zweiten Meldungsrate, die höher ist als die erste Meldungsrate, an das externe Gerät (115) zu senden.

14. Diebstahlschutzsystem nach Anspruch 1,
ferner umfassend ein externes Gerät (115), das dazu ausgelegt ist, mit dem Roboter-Gartengerät (105) zu kommunizieren, wobei der erste elektronische Prozessor (205) ausgelegt ist zum
Empfangen eines Verrieglungsbefehls von dem externen Gerät (115);
Unterbrechen oder Verhindern des zumindest einen Betriebs des Roboter-Gartengeräts (105) als Reaktion auf den Empfang des Verrieglungsbefehls;
Empfangen eines Entriegelungsbefehls von dem externen Gerät (115);
Gestatten des zumindest einen Betriebs des Roboter-Gartengeräts (105) als Reaktion auf den Empfang des Entriegelungsbefehls.

15. Diebstahlschutzsystem nach Anspruch 1,
wobei der eine oder die mehreren Sensoren (230) eine Sicherheitskamera (605) umfassen, die dazu ausgelegt ist, einen erwarteten Standort des Roboter-Gartengeräts (105) zu überwachen, wobei der erste elektronische Prozessor (205), oder ein zweiter elektronischer Prozessor (305), der sich entfernt vom Roboter-Gartengerät (105) befindet, oder sowohl der erste elektronische Prozessor (205) als auch der zweite elektronische Prozessor (305) ausgelegt sind zum
Analysieren von Bilddaten, die von der Sicherheitskamera (605) erfasst wurden, unter Verwendung einer Bildanalyse-Technik;
Feststellen, zumindest teilweise auf der Grundlage der Bildanalyse der Bilddaten, dass sich das Roboter-Gartengerät (105) nicht an dem erwarteten Standort befindet; und
Erkennen des potenziellen Diebstahlereignisses als Reaktion auf die Feststellung, dass sich das Roboter-Gartengerät (105) nicht an dem erwarteten Standort befindet.

## Revendications

1. Système de prévention du vol comportant :
un outil de jardinage robotisé (105) comprenant
un boîtier (125, 125A, 125B),
un ensemble de roues (130, 130A, 130B) couplées au boîtier (125, 125A, 125B) et conçues pour tourner afin de propulser l'outil de jardinage robotisé (105) sur une surface de travail,
au moins un moteur de roue (235, 235A, 235B) couplé à une ou plusieurs roues (130A) de l'ensemble de roues (130, 130A, 130B), ledit au moins un moteur de roue (235, 235A, 235B) étant conçu pour entraîner la rotation de la ou des roues (130A),
un ou plusieurs capteurs (230), et
un premier processeur électronique (205) conçu pour
détecter, à l'aide du ou des capteurs (230), un événement de vol potentiel associé à l'outil de jardinage robotisé (105), et
engager une action de protection antivol en réponse à la détection de l'événement de vol potentiel, l'action de protection antivol consistant à interrompre au moins une opération de l'outil de jardinage robotisé (105) jusqu'à ce que le premier processeur électronique (205) reçoive un code indiquant que l'événement de vol potentiel doit être ignoré,
le système de prévention du vol étant **caractérisé en ce que**
le ou les capteurs (230) comprennent un capteur de levage et une unité de mesure inertielle (IMU), le premier processeur électronique (205) étant conçu pour détecter l'événement de vol potentiel en déterminant qu'une première valeur mesurée reçue du capteur de levage dépasse un premier seuil prédéterminé, ou qu'une deuxième valeur mesurée reçue du capteur de l'unité de mesure inertielle (IMU) dépasse un deuxième seuil prédéterminé, ou à la fois que la première valeur mesurée dépasse le premier seuil prédéterminé et que la deuxième valeur mesurée dépasse le deuxième seuil prédéterminé.

2. Système de prévention du vol selon la revendication 1,
dans lequel l'outil de jardinage robotisé (105) comprend un dispositif d'entrée utilisateur (220), et le premier processeur électronique (205) est conçu pour recevoir le code provenant du dispositif d'entrée utilisateur (220) en réponse à la réception d'une première entrée utilisateur par le dispositif d'entrée utilisateur (220) ;
en option, l'outil de jardinage robotisé (105) comprend une première interface réseau (215), et un dispositif externe (115) comprenant une deuxième interface réseau (315) est conçu pour communiquer avec une première interface réseau (215) de l'outil de jardinage robotisé (105), la première interface réseau (215) étant couplée au premier processeur électronique (205) ;
le premier processeur électronique (205) est conçu pour recevoir le code via la première interface réseau (215) en réponse à la réception du code par le dispositif externe (115) via un deuxième dispositif d'entrée utilisateur (320) situé sur le dispositif externe (115).

3. Système de prévention du vol selon la revendication 1,
dans lequel l'outil de jardinage robotisé (105) comprend un compartiment à bloc-batterie conçu pour recevoir de manière amovible un bloc-batterie (117) qui est conçu pour alimenter en énergie ledit au moins un moteur de roue (235, 235A, 235B) ;
le compartiment à batterie comprend un dispositif de verrouillage de bloc-batterie conçu pour
rester verrouillé jusqu'à ce que le code ou un deuxième code soit reçu par le premier processeur électronique (205), et
se déverrouiller en réponse à la réception du code ou du deuxième code par le premier processeur électronique (205).

4. Système de prévention du vol selon la revendication 3,
dans lequel le dispositif de verrouillage de bloc-batterie comprend un premier dispositif de verrouillage, conçu pour verrouiller un volet du compartiment à batterie, ou un deuxième dispositif de verrouillage, conçu pour verrouiller les premières bornes du bloc-batterie (117) aux deuxièmes bornes du compartiment à bloc-batterie de l'outil de jardinage robotisé, ou comprend à la fois le premier dispositif de verrouillage et le deuxième dispositif de verrouillage.

5. Système de prévention du vol selon la revendication 3,
dans lequel le premier processeur électronique (205) est conçu pour contrôler si le dispositif de verrouillage de bloc-batterie est dans une position verrouillée ou dans une position déverrouillée en contrôlant un moteur secondaire couplé à un organe verrouillant du dispositif de verrouillage de bloc-batterie.

6. Système de prévention du vol selon la revendication 1,
dans lequel l'outil de jardinage robotisé (105) comprend un compartiment à bloc-batterie conçu pour recevoir de manière amovible un bloc-batterie (117) qui est conçu pour alimenter en énergie ledit au moins un moteur de roue (235, 235A, 235B) ;
le compartiment à batterie comprend un dispositif de verrouillage de bloc-batterie conçu pour
rester verrouillé jusqu'à ce que le code ou un deuxième code soit reçu par le dispositif de verrouillage de bloc-batterie via une entrée utilisateur manuelle, et
se déverrouiller en réponse à la réception du code ou du deuxième code par le dispositif de verrouillage de bloc-batterie via l'entrée utilisateur manuelle.

7. Système de prévention du vol selon la revendication 1,
dans lequel l'outil de jardinage robotisé (105) comprend un compartiment à bloc-batterie conçu pour recevoir de manière amovible un bloc-batterie (117) qui est conçu pour alimenter en énergie ledit au moins un moteur de roue (235, 235A, 235B) ;
le compartiment à batterie comprend un dispositif de verrouillage de bloc-batterie comprenant une partie de réception d'outil conçue pour recevoir un outil non standardisé ; et
le dispositif de verrouillage de bloc-batterie est conçu pour
rester verrouillé jusqu'à ce que l'outil non standardisé soit reçu dans la partie de réception d'outil et soit tourné, et pour
se déverrouiller en réponse à la réception et à la rotation de l'outil non standardisé dans la partie de réception d'outil.

8. Système de prévention du vol selon la revendication 1,
dans lequel
le ou les capteurs (230) comprennent un bouton « arrêt », et le premier processeur électronique (205) est conçu pour détecter l'événement de vol potentiel en déterminant que le bouton « arrêt » de l'outil de jardinage robotisé (105) a été actionné ;
le premier processeur électronique (205) est conçu pour détecter l'événement de vol potentiel en déterminant qu'une charge d'une ou plusieurs roues (130A) a changé d'une manière qui indique que la ou plusieurs roues (130A) ne sont plus en contact avec la surface de travail ;
le premier processeur électronique (205) est conçu pour détecter l'événement de vol potentiel en déterminant que l'outil de jardinage robotisé (105) se trouve à l'extérieur d'une limite virtuelle prédéterminée depuis plus longtemps qu'une période de temps prédéterminée ; et/ou
le premier processeur électronique (205) est conçu pour détecter l'événement de vol potentiel en déterminant que l'outil de jardinage robotisé (105) se trouve à l'extérieur d'une limite virtuelle prédéterminée d'une distance supérieure à une distance prédéterminée.

9. Système de prévention du vol selon la revendication 1,
dans lequel l'outil de jardinage robotisé (105) comprend un compartiment à bloc-batterie conçu pour recevoir un bloc-batterie (117) qui est conçu pour alimenter en énergie ledit au moins un moteur de roue (235, 235A, 235B) ; et
le premier processeur électronique (205) est conçu pour détecter l'événement de vol potentiel en déterminant qu'une tentative d'accès au compartiment à bloc-batterie est en cours, ou qu'une tentative de retrait du bloc-batterie (117) est en cours, ou à la fois qu'une tentative d'accès au compartiment à bloc-batterie est en cours et qu'une tentative de retrait du bloc-batterie (117) est en cours.

10. Système de prévention du vol selon la revendication 9,
dans lequel l'action de protection antivol consiste à commander une interface utilisateur de l'outil de jardinage robotisé (105) pour inviter un utilisateur à entrer le code afin d'accéder au bloc-batterie (117).

11. Système de prévention du vol selon la revendication 1,
dans lequel l'outil de jardinage robotisé (105) comprend un moteur de tâche (240) conçu pour entraîner la rotation d'un élément de travail (135) conçu pour effectuer une tâche ; et
ladite au moins une opération de l'outil de jardinage robotisé (105) qui est interrompue comprend le fonctionnement dudit au moins un moteur de roue (235, 235A, 235B), ou le fonctionnement du moteur de tâche (240), ou à la fois le fonctionnement dudit au moins un moteur de roue (235, 235A, 235B) et le fonctionnement du moteur de tâche (240).

12. Système de prévention du vol selon la revendication 1,
dans lequel l'action de protection antivol inclut que le premier processeur électronique (205) commande ledit au moins un moteur de roue (235, 235A, 235B) pour déplacer l'outil de jardinage robotisé (105) vers une station d'accueil (110) afin de se coupler à la station d'accueil (110).

13. Système de prévention du vol selon la revendication 1,
dans lequel l'outil de jardinage robotisé (105) comprend
une première interface réseau (215) conçue pour autoriser le premier processeur électronique (205) de communiquer avec un dispositif externe (115) ;
un compartiment à bloc-batterie conçu pour recevoir de manière amovible un bloc-batterie (117) qui est conçu pour alimenter en énergie ledit au moins un moteur de roue (235, 235A, 235B), le premier processeur électronique (205) et la première interface réseau (215) ; et
une batterie de secours (245) conçue pour alimenter en énergie la première interface réseau (215) et au moins une partie du premier processeur électronique (205) lorsque le bloc-batterie (117) n'est pas situé dans le compartiment à bloc-batterie ;
le premier processeur électronique (205) étant conçu pour
transmettre périodiquement un premier message d'état au dispositif externe (115) à un premier débit de messages, avant que l'événement de vol potentiel ne soit détecté, et pour
transmettre périodiquement un deuxième message d'état au dispositif externe (115) à un deuxième débit de messages qui est supérieur au premier débit de messages, en réponse à la détection de l'événement de vol potentiel.

14. Système de prévention du vol selon la revendication 1,
comprenant en outre un dispositif externe (115) conçu pour communiquer avec l'outil de jardinage robotisé (105), le premier processeur électronique (205) étant conçu pour :
recevoir une instruction de verrouillage provenant du dispositif externe (115) ;
interrompre ou empêcher ladite au moins une opération de l'outil de jardinage robotisé (105) en réponse à la réception de l'instruction de verrouillage ;
recevoir une instruction de déverrouillage provenant du dispositif externe (115) ;
autoriser ladite au moins une opération de l'outil de jardinage robotisé (105) en réponse à la réception de l'instruction de déverrouillage.

15. Système de prévention du vol selon la revendication 1,
dans lequel le ou les capteurs (230) comprennent une caméra de sécurité (605) conçue pour surveiller un emplacement prévu de l'outil de jardinage robotisé (105),
le premier processeur électronique (205), ou un deuxième processeur électronique (305) situé à distance de l'outil de jardinage robotisé (105), ou à la fois le premier processeur électronique (205) et le deuxième processeur électronique (305) sont conçus pour :
analyser, à l'aide d'une technique d'analyse d'images, les données d'image capturées par la caméra de sécurité (605) ;
déterminer, au moins partiellement sur la base de l'analyse d'images des données d'image, que l'outil de jardinage robotisé (105) ne se trouve pas à l'emplacement prévu ; et
détecter l'événement de vol potentiel en réponse à la détermination que l'outil de jardinage robotisé (105) ne se trouve pas à l'emplacement prévu.
